# EUROPÄISCHE PATENTSCHRIFT

(11) **EP 2 264 848 B1**
(45) Veröffentlichungstag und Bekanntmachung des Hinweises auf die Patenterteilung: **31.07.2013**
(21) Anmeldenummer: 09162864.4
(22) Anmeldetag: 16.06.2009
(51) Int. Cl.: H02G 3/06

(54) **Kabelverschraubung**
Cable connection
Dispositif de fixation de câble

(43) Veröffentlichungstag der Anmeldung: 22.12.2010
(73) Patentinhaber: ebm-papst Mulfingen GmbH & Co. KG, 74673 Mulfingen (DE)
(72) Erfinder: Best, Dieter, 74653, Ingelfingen (DE)
(74) Vertreter: Patentanwälte Dr. Solf & Zapf

(56) Entgegenhaltungen:
- EP-A- 0 448 396
- DE-A1- 3 417 882
- DE-A1- 19 923 636
- DE-B3- 10 337 965
- DE-C- 808 136
- DE-C1- 10 135 971
- DE-U1- 29 911 362
- US-A1- 2007 246 258
- US-B1- 7 504 582

## Beschreibung

Die vorliegende Erfindung betrifft eine Kabelverschraubung gemäß dem Oberbegriff des Anspruchs 1.

Aus der Druckschrift DE 9406382 U1 ist eine Kabelverschraubung bekannt, bei der zwei gegeneinander verdrehbare Teile, ein Kabeladapter und ein Anschraubstutzen, durch Schnapp- oder Rastverbindungen axial und durch eine Rasteinrichtung in einer vorbestimmten Drehstellung fixiert werden. Ein Nachteil dieser Ausführung ist, dass die Drehstellung durch die Rasteinrichtung vorgegeben ist. Ein zweiter Nachteil ist, dass die Kabelverschraubung für die Fixierung verdreht werden muss. Je nach räumlichen Gegebenheiten des Fahrzeuges und Ausrichtung der Kabelverbindung und Lage des Gehäuses kann die Montage durch diese Nachteile erschwert werden. Außerdem ist eine derartige Ausführungsform mit einer Rastverbindung nur schwer lösbar und kann während des Lösens beschädigt werden. Ferner wird die Länge des gehäuseseitigen Teils durch einen auf dem Außenumfang angebrachten Sechskant, der als Werkzeugangriff zum Anschrauben des Anschraubstutzens an das Gehäuse dient, verlängert, welches sich aus Platzgründen ebenfalls nachteilig auf die Montage auswirken kann.

Bei einem bekannten Elektronikgehäuse eines Elektromotors wie z. B. in der DE 103 13 274 A1 beschrieben, weist das Elektronikgehäuse eine Öffnung zum elektrischen Anschluss auf, wobei diese Öffnung mit einem mit äußeren Anschlussleitungen verbundenen Anschlusssteckverbinder dicht verschließbar ist.

Aus der DE 199 23 636 A1 ist eine gattungsgemäße Kabelverschraubung bekannt. Hierbei wird das Kabelwellrohr direkt in den Anschraubstutzen gesteckt und in der eingesteckten Stellung durch Anziehen der Überwurfmutter in der eingesteckten Stellung fixiert. Vor dem Anziehen der Überwurfmutter kann eine Ausrichtung des Wellrohres erfolgen. Hierbei ist jedoch der Nachteil gegeben, dass bei einer erforderlichen Lageanpassung des Wellrohres, in dem das anzuschließende Kabel verläuft, eine Insgesamtverdrehung des Kabels erforderlich ist, wobei jedoch derartige Kabeltorsionen unerwünscht sind und außerdem den Montagevorgang erheblich erschweren.

Der vorliegenden Erfindung liegt die Aufgabe zugrunde, die oben beschriebenen Nachteile zu vermeiden und eine Kabelverschraubung der gattungsgemäßen Art derart auszugestalten, dass keine Beschränkung in der Verdrehbarkeit vorhanden ist, die Fixierung der Kabelverschraubung bei jeder beliebigen Drehlage möglich ist, die Verbindung einfach und ohne Beschädigung lösbar ist und gleichzeitig die Länge der Kabelverschraubung klein gehalten wird.

Erfindungsgemäß wird dies durch die Merkmale des kennzeichnenden Teils des Anspruchs 1 erreicht.

Die Erfindung hat den Vorteil, dass der Kabeladapter mit jeder beliebigen Stellung in den Anschraubstutzen eingesteckt werden kann und die Drehstellung auch nach dem Einstecken beliebig ausrichtbar ist. Hierbei kann der Kabeladapter in beliebiger Drehstellung in dem Anschraubstutzen fixiert werden. Die erfindungsgemäße Fixierung hat den Vorteil, dass sie auf eine einfach zu lösende Kraftschlussverbindung zwischen der Überwurfmutter, den Spannarmen des Anschraubstutzen und der Spannvertiefung des Einsteckstutzens beruht und damit auch ohne Beschädigung der Schnapparme oder der Schnappvertiefung lösbar ist.

Ferner hat die vorliegende Erfindung den Vorteil, dadurch eine Verkürzung des Anschraubstutzens zu ermöglichen, dass der Anschraubstutzen auf seinem Innenumfang der Durchgangsöffnung im Bereich des Anschraubgewindes mit einer innenliegenden Mehrkantkontur als Innenkraftangriff versehen ist, der es erlaubt, den Anschraubstutzen mit einem normalen Sechskantschlüssel von innen greifend einzuschrauben.

Die erfindungsgemäße Kabelverschraubung ist vorteilhafterweise aus Kunststoff hergestellt.

Weitere vorteilhafte Ausgestaltungsmerkmale der Erfindung sind in den abhängigen Ansprüchen und der nachfolgenden Beschreibung enthalten.

Anhand der in den beiliegenden Zeichnungen veranschaulichten Ausführungsbeispiele soll die Erfindung genauer erläutert werden. Dabei zeigen:
- Fig. 1: eine Explosionsdarstellung eines Ausführungsbeispiels einer erfindungsgemäßen Kabelverschraubung,
- Fig. 2: einen axialen Querschnitt eines Ausführungsbeispiels einer zusammengesteckten und fixierten erfindungsgemäßen Kabelverschraubung,
- Fig. 3: einen axialen Querschnitt eines weiteren Ausführungsbeispiels einer erfindungsgemäßen Kabelverschraubung,
- Fig. 4: einen axialen Querschnitt eines Teilbereiches eines Elektronikgehäuses mit montiertem Anschraubstutzen,
- Fig. 5: einen Ausschnitt einer dreidimensionalen Ansicht eines Elektromotors mit Elektronikgehäuse mit erfindungsgemäßer Kabelverschraubung ohne Anschlussleitungen,
- Fig. 6: eine dreidimensionale Ansicht einer Lüftungseinheit mit Elektromotor mit Elektronikgehäuse mit erfindungsgemäßer Kabelverschraubung gemäß Ausführungsbeispiel Fig. 3,
- Fig. 7: einen Querschnitt eines Ausschnitts eines Elektronikgehäuses mit eingeschraubter erfindungsgemäßen Kabelverschraubung.

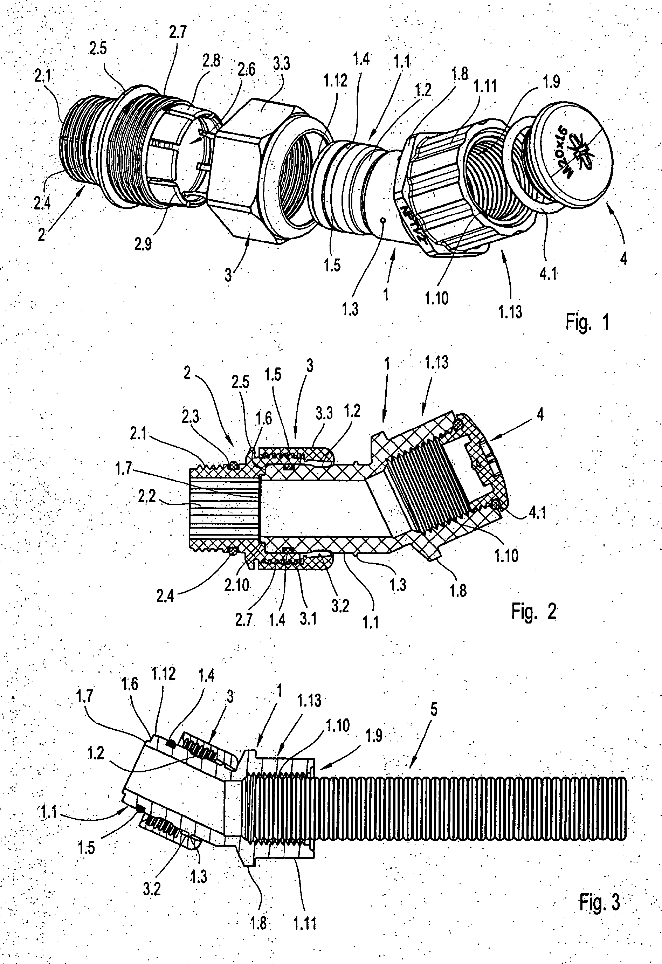

In den Fig. 1 bis 7 sind gleiche Teile mit denselben Bezugszeichen gekennzeichnet.

In Fig. 1 und Fig. 2 ist beispielhaft eine erfindungsgemäße Kabelverschraubung veranschaulicht, welche aus einem Kabeladapter 1, einem Anschraubstutzen 2, einer Überwurfmutter 3, einer Verschlussschraube 4 und mehreren O-Ring Dichtungen 1.5, 2.4, 4.1 besteht.

Der Anschraubstutzen 2 ist hohlzylinderförmig ausgebildet und hat zwei durch eine auf dem Außenumfang verlaufende Anlagewand 2.5 aufgeteilte Gehäuseabschnitte mit einer Durchgangsöffnung. In dem dem Kabeladapter 1 abgewandten Gehäuseabschnitt weist der Anschraubstutzen 2 auf seinem Außenumfang ein Anschraubgewinde 2.1 und zwischen dem Anschraubgewinde 2.1 und der Anlagewand 2.5 eine Umfangsnut 2.3 mit einer O-Ring Dichtung 2.4 auf. Die O-Ring Dichtung 2.4 dichtet die Verbindung zwischen dem Anschraubstutzen 2 und einem nicht dargestellten Befestigungsgehäuse ab. Zusätzlich befindet sich an dem Innenumfang der Durchgangsöffnung im Bereich des Anschraubgewindes 2.1 eine innenliegende Mehrkantkontur 2.2, die als Innenkraftangriff zum Einschrauben des Anschraubstutzens 2 in das Befestigungsgehäuse mittels eines Mehrkantschlüssels dient. In dem dem Kabeladapter 1 zugewandten Gehäuseabschnitt weist der Anschraubstutzen 2 mehrere an seinem Außenumfang verteilte radialelastische Schnapparme 2.8 auf, die als durch einen Spalt getrennte Umfangssegmente ausgebildet sind und zu der Einstecköffnung 2.6 hin konisch zulaufen und am Ende auf ihren inneren und äußeren Seiten Abschrägungen 2.9 besitzen. Zwischen den Schnapparmen 2.8 und der Anlagewand 2.5 des Anschraubstutzens 2 befindet sich auf dem Außenumfang ein Spanngewinde 2.7. Zusätzlich befindet sich am inneren Ende der Einstecköffnung 2.6 eine über den Innenumfang verlaufende Zentriervertiefung 2.10, welche den Kabeladapter 1 im voll eingesteckten Zustand in der Einstecköffnung 2.6 zentriert.

Der Kabeladapter 1 ist ebenfalls hohlzylinderförmig ausgebildet und besitzt zwei durch einen auf dem Außenumfang verlaufenden Außensechskant 1.8 aufgeteilte Gehäuseabschnitte mit einer Durchgangsöffnung. In dem dem Anschraubstutzen 2 zugewandten Gehäuseabschnitt weist der Kabeladapter 1 einen Einsteckstutzen 1.1 auf. Der Einsteckstutzen 1.1 hat an seinem dem Anschraubstutzen 2 zugewandten Ende eine konisch verlaufende Abschrägung 1.12 des Umfangs und auf seiner Stirnfläche einen Zentrieraufsatz 1.7. Zusätzlich hat der Einsteckstutzen 1.1 eine an seinem Außenumfang verlaufende Schnappvertiefung 1.2 und weist zwischen der Schnappvertiefung 1.2 und der Abschrägung 1.12 eine Umfangsnut 1.4 mit einer O-Ring Dichtung 1.5 auf. Die O-Ring Dichtung 1.5 dichtet die Verbindung zwischen dem Anschraubstutzen 2 und dem Kabeladapter 1 ab. Außerdem befinden sich zwischen der Schnappvertiefung 1.2 und dem Außensechskant 1.8 auf dem Außenumfang des Einsteckstutzens 1.1 zwei Haltenocken 1.3 mit in axialer Richtung des Einsteckstutzens 1.1 elastisch verformbaren Endbereichen, welche im nicht eingesteckten Zustand die Überwurfmutter 3 gegen ein Herunterrutschen vom Einsteckstutzen 1.1 mittels einer Kraftformschlussverbindung mit der Spannfläche 3.2 der Überwurfmutter 3 sichern. In dem dem Anschraubstutzen 2 abgewandten Gehäuseabschnitt weist der Kabeladapter 1 einen Kabelaufnahmestutzen 1.13 auf. Der Kabelaufnahmestutzen 1.13 besitzt an seinem dem Anschraubstutzen 2 abgewandten Ende eine Kabelanschlussöffnung 1.9 mit einem in seinem Innenumfang verlaufenden Innengewinde 1.10 und an seinem Außenumfang mehrere über den Umfang verteilte axial verlaufende Angriffvertiefungen 1.11. Die Achsen des Einsteckstutzens 1.1 und des Kabelaufnahmestutzens 1.13 schließen einen Winkel α ≤ 180°, vorzugsweise einen stumpfen Winkel, ein.

Die Überwurfmutter 3 hat an der dem Anschraubstutzen 2 zugewandten Seite ein im Innenumfang verlaufendes Spanngewinde 3.1 und einen auf ihrem Außenumfang verlaufenden Außensechskant 3.3. An der von dem Anschraubstutzen 2 abgewandten Seite des Innenumfangs befindet sich eine konisch zulaufende Spannfläche 3.2. Der Außensechskant 3.3 dient als Kraftangriff für ein nicht dargestelltes Spannwerkzeug, um die Überwurfmutter 3 mittels ihres Spanngewindes 3.1 auf das Spanngewinde 2.7 des Anschraubstutzens 2 aufzuschrauben.

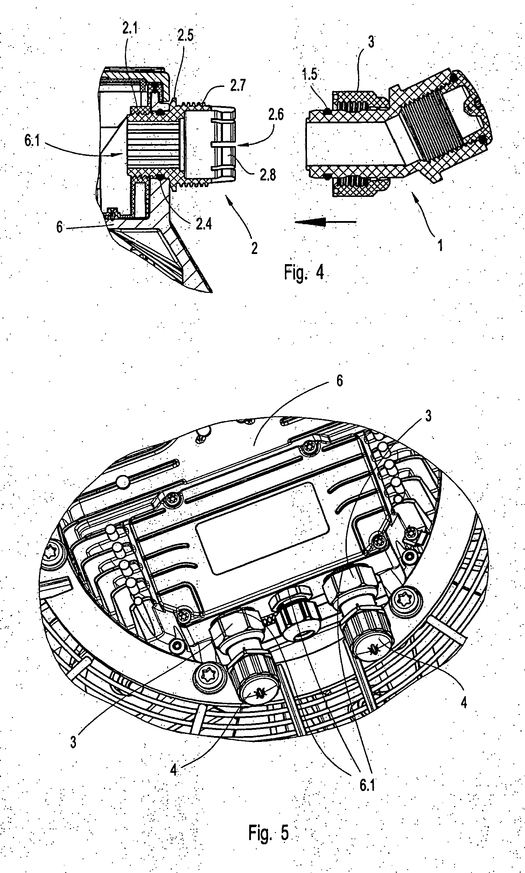

Die Montage der in Fig. 1 und 2 dargestellten erfindungsgemäßen Kabelverschraubung erfolgt gemäß Fig. 4 an einem Elektronikgehäuse 6 z. B. eines nicht näher bezeichneten Elektromotors. Das Elektronikgehäuse 6 weist mindestens eine mit einem Innengewinde versehene Anschrauböffnung 6.1 auf, in die der Anschraubstutzen 2 eingeschraubt wird. Zur Abdichtung des Anschraubstutzens 2 dient die bereits vorgenannte O-Ring-Dichtung 2.4. Dadurch ist der Anschraubstutzen am Elektronikgehäuse 6 fixiert.

Dann erfolgt die weitere Montage der erfindungsgemäßen Kabelverschraubung, indem der Kabeladapter 1 am Anschraubstutzen 2 befestigt wird. Hierzu wird die Überwurfmutter 3 mit der Seite der Spannfläche 3.2 auf den Einsteckstutzen 1.1 des Kabeladapters 1 bis hinter die Haltenocken 1.3 aufgeschoben. Der Kabeladapter 1 wird mit einer beliebig wählbaren Drehstellung relativ zum Anschraubstutzen 2 in die Einstecköffnung 2.6 des Anschraubstutzens 2 eingesteckt. Dabei werden die radialelastischen Schnapparme 2.8 des Anschraubstutzens 2 durch die axiale Bewegungskraft des Kabeladapters 1 und durch die Bewegung der Abschrägung 2.9 der Schnapparme 2.8 gegen die Abschrägung 1.12 des Einsteckstutzens 1.1 radial aufgebogen, bis die Schnapparme 2.8 bei vollständig eingestecktem Zustand in die Schnappvertiefung 1.2 des Einsteckstutzens 1.1 einschnappen und eine axiale Kraftformschlussverbindung zwischen Anschraubstutzen 2 und Kabeladapter 1 erzeugen. Im eingeschnappten Zustand ist es möglich, die Drehstellung des Kabeladapters 1 zusätzlich auszurichten, da keine Kräfte in Umfangsrichtung erzeugt werden.

Die Kabelverschraubung kann nun in jeder beliebigen Drehstellung des Kabeladapters 1 relativ zum Anschraubstutzen 2 fixiert werden, indem die Überwurfmutter 3 über die Haltenocken 1.3 des Einsteckstutzens 1.1 geschoben und auf das Spanngewinde 2.7 des Anschraubstutzen 2 geschraubt wird. Dabei übt die Spannfläche 3.2 der Überwurfmutter 3 eine radiale Klemmkraft auf die Schnapparme 2.8 des Anschraubstutzens 2 aus und erzeugt eine Kraftschlussverbindung zwischen den Schnapparmen 2.8 des Anschraubstutzens 2 und der Schnappvertiefung 1.2 des Einsteckstutzens 1.1 des Kabeladapters 1. Die Abdichtung dieser Verbindungsstelle wird durch die O-Ring-Dichtung 1.5 sichergestellt.

Zum einfachen und beschädigungsfreien Lösen der Verbindung wird die Überwurfmutter 3 vom Spanngewinde 2.7 des Anschraubstutzens 2 abgeschraubt und damit die oben beschriebene Klemmkraft aufgehoben. Die oben beschriebene Kraftformschlussverbindung der Schnapparme 2.8 mit der Schnappvertiefung 1.2 kann ohne Beschädigungen und ohne spezielle Lösewerkzeuge einfach durch ein axiales Herausziehen des Kabeladapters 1 getrennt werden, da die Schnapparme 2.8 keine Hinterschneidungen besitzen.

Die Verschlussschraube 4 hat eine auf ihr Gewinde aufgesteckte O-Ring Dichtung 4.1 und dient zum Verschließen und Abdichten der Kabelanschlussöffnung 1.9, indem die Verschlussschraube 4 in das Innengewinde der Kabelanschlussöffnung 1.9 eingeschraubt wird, falls kein Kabelanschluss für die Kabelverschraubung benötigt wird.

In Fig. 3 ist beispielhaft ein Teil einer weiteren Ausführungsform einer erfindungsgemäßen Kabelverschraubung veranschaulicht und zeigt eine Darstellung bei der in die Kabelanschlussöffnung 1.9 des Kabeladapters 1 ein Kabelwellrohr 5 eingesteckt und mittels einer Klebeverbindung fest mit dem Innengewinde 1.10 der Kabelanschlussöffnung 1.9 verbunden ist. Das eigentliche die elektrischen Verbindungen herstellende Kabel ist nicht dargestellt. Diese vorgefertigte Kabelverbindung kann Aufgrund der erfindungsgemäßen Kabelverschraubung in einer beliebigen Drehstellung in einen an einem Befestigungsgehäuse vormontierten Anschraubstutzen 2 eingesteckt werden und mittels der Überwurfmutter 3 und den Schnapparmen 2.8 des Anschraubstutzens 2 und der Schnappvertiefung 1.2 des Kabeladapters 1 in der jeweiligen Drehstellung ohne ein zusätzliches Verdrehen der vorgefertigten Kabelverbindung fixiert werden.

In Fig. 5 ist ein Ausschnitt eines Elektronikgehäuses 6 mit zwei erfindungsgemäßen Kabelverschraubungen dargestellt. Das Elektronikgehäuse 6 besitzt drei Einschrauböffnungen 6.1 zum Befestigen einer Kabelverschraubung, wobei in zwei dieser Einschrauböffnungen 6.1 eine erfindungsgemäße Kabelverschraubung mit montierten Verschlussschrauben 4 eingeschraubt ist und in der dritten mittleren Einschrauböffnung 6.1 eine andere Kabelverschraubung befestigt ist.

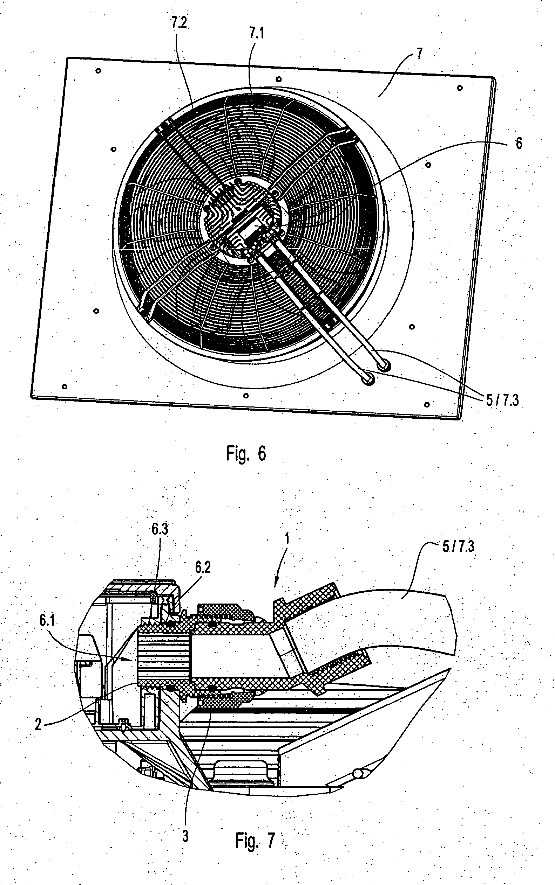

In Fig. 6 ist beispielhaft eine Lüftungseinheit 7 mit Ventilator 7.1, Schutzgitter 7.2 und Elektromotor dargestellt. Der Elektromotor besitzt ein Elektronikgehäuse 6 mit zwei erfindungsgemäßen Kabelverschraubungen, die mit zwei Anschlussleitungen 7.3 verbunden sind.

In Fig. 7 ist beispielhaft dargestellt, wie eine erfindungsgemäße Kabelverschraubung mit befestigtem Wellrohr 5 und nicht dargestellter Anschlussleitung 7.3 in ein erfindungsgemäßes Elektronikgehäuse 6 eingeschraubt ist. Das Elektronikgehäuse 6 besitzt eine Einschrauböffnung 6.1 mit einer kreiszylindrischen inneren Dichtfläche 6.2 zum Abdichten der Verbindung zwischen dem Anschraubstutzen 2, Kabelverschraubung und Elektronikgehäuse 6 und einem Innengewinde 6.3 zum Einschrauben der Kabelverschraubung mit dem Anschraubgewinde 2.1. Das Innengewinde 6.3 befindet sich relativ zur Dichtfläche 6.2 an der inneren Seite des Elektronikgehäuses 6.

## Patentansprüche

1. Kabelverschraubung zum Befestigen einer Kabelverbindung für ein Elektronikgehäuse (6) eines Elektromotors, bestehend aus einem mit dem Gehäuse (6) verschraubbaren Anschraubstutzen (2), wobei der Anschraubstutzen (2) an der Seite seiner Einstecköffnung (2.6) mehrere an deren Umfang verteilte radialelastische Schnapparme (2.8) als Fixiermittel aufweist, und einer auf dem Anschraubstutzen (2) auf einem in Aufschraubrichtung hinter den Schnapparmen (2.8) liegendem Spanngewinde (2.7) aufschraubbaren Überwurfmutter (3), die mittels einer innenliegenden, gegen die Aufschraubrichtung konisch verlaufenden Spannfläche (3.2) eine axiale und gegen die relative Verdrehung wirkende Kraftschlussverbindung durch die Schnapparme (2.8) bewirkt,
**gekennzeichnet durch** einen Kabeladapter (1), der einseitig einen Gehäuseabschnitt mit einem Kabelaufnahmestutzen (1.13) und anderseitig einen Gehäuseabschnitt mit einem Einsteckstutzen (1.1) aufweist, und der Kabeladapter (1) mit dem Einsteckstutzen (1.1) in die Einstecköffnung (2.6) des Anschraubstutzens (2) einsteckbar ist, wobei die Überwurfmutter (3) auf dem Einsteckstutzen (1.1) des Kabeladapters (1) aufgeschoben ist, und die Schnapparme (2.8), die Überwurfmutter (3) und der Einsteckstutzen (1.1) derart ausgebildet sind, dass sie in einer Montagestellung ein axiales Einstecken des Kabeladapters (1) in den Anschraubstutzen (2) mit einer beliebigen Drehstellung relativ zueinander und in einem eingesteckten Zustand ein Ausrichten der Drehstellung des Kabeladapters (1) relativ zum Anschraubstutzen (2) ermöglichen und in einer Fixierstellung den Kabeladapter (1) axial und in der jeweiligen relativen Drehstellung mit dem Anschraubstutzen (2) feststellen, indem der Einsteckstutzen (1.1) des Kabeladapters (1) eine auf seinem Außenumfang verlaufende Schnappvertiefung (1.2) aufweist, und die Schnapparme (2.8) im vollständig eingesteckten Zustand des Einsteckstutzens (1.1) in die Schnappvertiefung (1.2) eingreifen und eine axiale Kraftformschlussverbindung zwischen dem Einsteckstutzen (1.1) und den Schnapparmen (2.8) bewirken.

2. Kabelverschraubung nach Anspruch 1,
**dadurch gekennzeichnet, dass** die Achsen des Kabelaufnahmestutzens (1.13) und des Einsteckstutzens (1.1) einen Winkel (α) ≤ 180° bilden.

3. Kabelverschraubung nach Anspruch 1 oder 2,
**dadurch gekennzeichnet, dass** der Einsteckstutzen (1.1) mindestens zwei Haltenocken (1.3) an seinem Außenumfang aufweist, welche die Überwurfmutter (3) im nicht eingesteckten Zustand des Einsteckstutzens (1.1) gegen ein Herunterrutschen vom Einsteckstutzen (1.1) durch eine Kraftformschlussverbindung mit der Spannfläche (3.2) sichern.

4. Kabelverschraubung nach einem der Ansprüche 1 bis 3,
**dadurch gekennzeichnet, dass** die Schnapparme (2.8) des Anschraubstutzens (2) als in Richtung der Einstecköffnung (2.6) konisch zulaufende, durch einen Spalt getrennte Umfangssegmente (2.8) ausgebildet sind, welche an ihrem der Einstecköffnung (2.6) zugewandten Ende des Innenumfangs und des Außenumfangs eine Abschrägung (2.9) aufweisen.

5. Kabelverschraubung nach einem der Ansprüche 1 bis 4,
**dadurch gekennzeichnet, dass** der Einsteckstutzen (1.1) an seiner äußeren Seitenwand (1.6) einen Zentrieraufsatz (1.7) aufweist, und der Anschraubstutzen (2) an seiner inneren Seitenwand der Einstecköffnung (2.6) eine dazu passende Zentriervertiefung (2.10) aufweist.

6. Kabelverschraubung nach einem der Ansprüche 1 bis 5,
**dadurch gekennzeichnet, dass** der Anschraubstutzen (2) an der der Einstecköffnung (2.6) abgewandten Seite auf seinem Außenumfang ein Anschraubgewinde (2.1) aufweist, welches in Richtung des Spanngewindes (2.7) von einer Anlagewand (2.5) begrenzt wird.

7. Kabelverschraubung nach einem der Ansprüche 1 bis 6,
**dadurch gekennzeichnet, dass** der Anschraubstutzen (2) auf seinem Innenumfang der Durchgangsöffnung im Bereich des Anschraubgewindes (2.1) mit einer innenliegenden Mehrkantkontur (2.2) als Innenkraftangriff versehen ist.

8. Kabelverschraubung nach einem der Ansprüche 1 bis 7,
**dadurch gekennzeichnet, dass** der Einsteckstutzen (1.1) zwischen der Schnappvertiefung (1.2) und der Seitenwand (1.6) eine auf seinem Außenumfang verlaufende Umfangsnut (1.4) mit einer O-Ring Dichtung (1.5) aufweist.

9. Kabelverschraubung nach einem der Ansprüche 1 bis 8,
**dadurch gekennzeichnet, dass** der Anschraubstutzen (2) zwischen dem Anschraubgewinde (2.1) und der Anlagewand (2.5) eine auf seinem Außenumfang verlaufende Umfangsnut (2.3) mit einer O-Ring Dichtung (2.4) aufweist.

10. Kabelverschraubung nach einem der Ansprüche 1 bis 9,
**gekennzeichnet durch** eine Kabelanschlussöffnung (1.9), die in ihrem Innenumfang ein Innengewinde (1.10) aufweist, und eine Verschlussschraube (4) mit einer O-Ring Dichtung (4.1), welche die Kabelanschlussöffnung (1.9) des Kabeladapters (1) schließt.

11. Kabelverschraubung nach einem der Ansprüche 1 bis 10,
**dadurch gekennzeichnet, dass** ein Wellrohr (5) mit der Kabelanschlussöffnung (1.9) mittels einer Klebeverbindung fest verbunden ist.

12. Kabelverschraubung nach einem der Ansprüche 1 bis 11,
**dadurch gekennzeichnet, dass** das die Kabelverschraubung aus Kunststoff hergestellt ist.

13. Elektronikgehäuse (6) eines Elektromotors,
**gekennzeichnet durch** eine montierte Kabelverschraubung mit den Merkmalen eines der Ansprüche 1 bis 12.

## Claims

1. Cable gland for attaching a cable connection for an electronics housing (6) of an electric motor, comprising a screw-on connecting stub (2) which can be screwed to the housing (6), wherein the screw-on connecting stub (2) has on the side of its plug-in opening (2.6) a plurality of radially elastic snap-action arms (2.8) distributed on the circumference of the plug-in opening (2.6) as fixing means, and a union nut (3) which can be screwed onto the screw-on connecting stub (2) on a tightening thread (2.7) located behind the snap-action arms (2.8) in the screwing-on direction, and produces an axial force-locked connection which counteracts the relative rotation, by the snap-action arms (2.8), by means of an internal clamping surface (3.2) which tapers conically in the opposite direction to the screwing-on direction,
**characterised by** a cable adapter (1) which has a housing section with a cable holding connecting stub (1.13) on one side and has a housing section with a plug-in connecting stub (1.1) on the other side, and the cable adapter (1) with the plug-in connecting stub (1.1) can be plugged into the plug-in opening (2.6) of the screw-on connecting stub (2), wherein the union nut (3) is pushed onto the plug-in connecting stub (1.1) of the cable adapter (1), and the snap-action arms (2.8), the union nut (3) and the plug-in connecting stub (1.1) are formed in such a manner that, in an assembly position, they allow an axial insertion of the cable adapter (1) into the screw-on connecting stub (2) in any desired rotation position relative to one another and, in an inserted state, they allow an alignment of the rotation position of the cable adapter (1) relative to the screw-on connecting stub (2) and, in a fixing position, they fix the cable adapter (1) axially and in the respective relative rotation position to the screw-on connecting stub (2), in that the plug-in connecting stub (1.1) of the cable adapter (1) has a snap-action depression (1.2) which runs on its external circumference, and the snap-action arms (2.8) engage in the snap-action depression (1.2) when the plug-in connecting stub (1.1) is in the completely inserted state, and produce an axial force-locked and form-locked connection between the plug-in connecting stub (1.1) and the snap-action arms (2.8).

2. Cable gland according to Claim 1,
**characterised in that** the axes of the cable holding connecting stub (1.13) and of the plug-in connecting stub (1.1) form an angle (α) ≤ 180°.

3. Cable gland according to Claim 1 or 2,
**characterised in that** the plug-in connecting stub (1.1) has at least two holding studs (1.3) on its external circumference, which holding studs (1.3) secure the union nut (3), when the plug-in connecting stub (1.1) has not been plugged in, against a sliding out from the plug-in connecting stub (1.1), by means of a force-locked and form-locked connection with the clamping surface (3.2).

4. Cable gland according to one of Claims 1 to 3,
**characterised in that** the snap-action arms (2.8) of the screw-on connecting stub (2) are in the form of circumferential segments (2.8), which taper conically in the direction of the insertion opening (2.6), separated by a gap and have a chamfer (2.9) at their end of the internal circumference and of the external circumference facing the insertion opening (2.6).

5. Cable gland according to one of Claims 1 to 4,
**characterised in that** the plug-in connecting stub (1.1) has a centring attachment (1.7) on its outer side wall (1.6), and the screw-on connecting stub (2) has a centring depression (2.10), which matches the centring attachment on its inner side wall of the insertion opening (2.6).

6. Cable gland according to one of Claims 1 to 5,
**characterised in that** the screw-on connecting stub (2) has a screw-on thread (2.1), which is bounded by a contact wall (2.5) in the direction of the tightening thread (2.7), on its external circumference on the side facing away from the insertion opening (2.6).

7. Cable gland according to one of Claims 1 to 6,
**characterised in that** the screw-on connecting stub (2) is provided on its internal circumference of the through-opening in the area of the screw-on thread (2.1) with an internal polygonal contour (2.2) as an internal force action profil.

8. Cable gland according to one of Claims 1 to 7,
**characterised in that** the plug-in connecting stub (1.1) has a circumferential groove (1.4), which runs on its external circumference and has an 0-ring seal (1.5), between the snap-action depression (1.2) and the side wall (1.6).

9. Cable gland according to one of Claims 1 to 8,
**characterised in that** the screw-on connecting stub (2) has a circumferential groove (2.3), which runs on its external circumference and has an 0-ring seal (2.4), between the screw-on thread (2.1) and the contact wall (2.5).

10. Cable gland according to one of Claims 1 to 9,
**characterised by** a cable connecting opening (1.9), which has an internal thread (1.10) in its internal circumference, and a closure screw (4) with an 0-ring seal (4.1), which closes the cable connecting opening (1.9) of the cable adapter (1).

11. Cable gland according to one of Claims 1 to 10,
**characterised in that** a corrugated tube (5) is firmly connected to the cable connecting opening (1.9) by means of an adhesive joint.

12. Cable gland according to one of Claims 1 to 11,
**characterised in that** the cable gland is produced from plastic.

13. Electronics housing (6) of an electric motor,
**characterised by** an assembled cable gland having the features of one of Claims 1 to 12.

## Revendications

1. Dispositif de fixation de câble par vissage permettant de fixer un raccordement de câble pour un boîtier électronique (6) d'un moteur électrique, constitué d'une tubulure à visser (2) pouvant être vissée au boîtier (6), dans lequel la tubulure à visser (2) présente, sur le côté de son orifice d'enfichage (2.6), en tant que moyens de fixation, plusieurs bras à encliqueter (2.8) élastiques radialement répartis sur la périphérie dudit orifice d'enfichage, et constitué d'un écrou d'accouplement (3) pouvant être vissé sur la tubulure à visser (2), sur un filetage de serrage (2.7) se trouvant dans la direction de vissage derrière les bras à encliqueter (2.8), lequel écrou d'accouplement effectue, grâce aux bras à encliqueter (2.8), au moyen d'une surface de serrage (3.2) intérieure s'étendant à la manière d'un cône dans le sens inverse du sens de vissage, un assemblage à force axial et agissant contre la torsion relative,
**caractérisé par** un adaptateur de câble (1), qui présente d'un côté une partie de boîtier dotée d'une tubulure de réception de câble (1.13) et de l'autre côté une partie de boîtier dotée d'une tubulure d'enfichage (1.1), et dans lequel l'adaptateur de câble (1) peut être enfiché à l'aide de la tubulure d'enfichage (1.1) dans l'orifice d'enfichage (2.6) de la tubulure à visser (2), dans lequel l'écrou d'accouplement (3) est enfilé sur la tubulure d'enfichage (1.1) de l'adaptateur de câble (1) et dans lequel les bras à encliqueter (2.8), l'écrou d'accouplement (3) et la tubulure d'enfichage (1.1) sont réalisés de telle manière qu'ils permettent, dans une position de montage, un enfichage axial de l'adaptateur de câble (1) dans la tubulure à visser (2) avec une position de rotation souhaitée l'un par rapport à l'autre et, dans un état enfiché, une orientation de la position de rotation de l'adaptateur de câble (1) par rapport à la tubulure à visser (2) et de telle manière qu'ils bloquent, dans une position fixée, l'adaptateur de câble (1) de manière axiale et dans chaque position de rotation relative avec la tubulure à visser (2), du fait que la tubulure d'enfichage (1.1) de l'adaptateur de câble (1) présente une encoche à encliqueter (1.2) s'étendant sur sa périphérie extérieure, et que les bras à encliqueter (2.8) viennent en prise avec l'encoche à encliqueter (1.2) lorsque la tubulure d'enfichage (1.1) est totalement enfichée et effectuent un assemblage axial à force entre la tubulure d'enfichage (1.1) et les bras à encliqueter (2.8).

2. Dispositif de fixation de câble par vissage selon la revendication 1, **caractérisé en ce que** les axes de la tubulure de réception de câble (1.13) et de la tubulure d'enfichage (1.1) forment un angle (α) ≤ 180°.

3. Dispositif de fixation de câble par vissage selon la revendication 1 ou 2, **caractérisé en ce que** la tubulure d'enfichage (1.1) présente, au niveau de sa périphérie extérieure, au moins deux cames de maintien (1.3), lesquelles empêchent, lorsque la tubulure d'enfichage (1.1) n'est pas enfichée, l'écrou d'accouplement (3) de glisser de la tubulure d'enfichage (1.1) grâce à un assemblage à force avec la surface de serrage (3.2).

4. Dispositif de fixation de câble par vissage selon l'une quelconque des revendications 1 à 3,
**caractérisé en ce que** les bras à encliqueter (2.8) de la tubulure à visser (2) sont réalisés sous la forme de segments périphériques (2.8) s'étendant à la manière d'un cône en direction de l'orifice d'enfichage (2.6), séparés par un interstice, lesquels segments périphériques présentent au niveau de leur extrémité, tournée vers l'orifice d'enfichage (2.6), de la périphérie intérieure et de la périphérie extérieure, un chanfrein (2.9).

5. Dispositif de fixation de câble par vissage selon l'une quelconque des revendications 1 à 4,
**caractérisé en ce que** la tubulure d'enfichage (1.1) présente, au niveau de sa paroi latérale (1.6) extérieure, un élément de recouvrement de centrage (1.7), et **en ce que** la tubulure à visser (2) présente, au niveau de la paroi latérale intérieure de son orifice d'enfichage (2.6), une encoche de centrage (2.10) adapté à cet effet.

6. Dispositif de fixation de câble par vissage selon l'une quelconque des revendications 1 à 5,
**caractérisé en ce que** la tubulure à visser (2) présente, au niveau du côté opposé à l'orifice d'enfichage (2.6), sur sa périphérie extérieure, un filetage à visser (2.1), qui est délimité dans la direction du filetage de serrage (2.7) par une paroi d'appui (2.5).

7. Dispositif de fixation de câble par vissage selon l'une quelconque des revendications 1 à 6,
**caractérisé en ce que** la tubulure à visser (2) est pourvue, sur la périphérie intérieure de son orifice de passage, dans la zone du filetage à visser (2.1), d'un contour polygonal (2.2) presentant un profil intérieur d'application d'une force.

8. Dispositif de fixation de câble par vissage selon l'une quelconque des revendications 1 à 7,
**caractérisé en ce que** la tubulure d'enfichage (1.1) présente, entre l'encoche à encliqueter (1.2) et la paroi latérale (1.6), une rainure périphérique (1.4) s'étendant sur sa périphérie extérieure et dotée d'un joint torique d'étanchéité (1.5).

9. Dispositif de fixation de câble par vissage selon l'une quelconque des revendications 1 à 8,
**caractérisé en ce que** la tubulure à visser (2) présente entre le filetage à visser (2.1) et la paroi d'appui (2.5), une rainure périphérique (2.3) s'étendant sur sa périphérie extérieure et dotée d'un joint torique d'étanchéité (2.4).

10. Dispositif de fixation de câble par vissage selon l'une quelconque des revendications 1 à 9,
**caractérisé par** un orifice de raccordement de câble (1.9), qui présente dans sa périphérie intérieure, un filetage intérieur (1.10) et une vis de fermeture (4) dotée d'un joint torique d'étanchéité (4.1), laquelle ferme l'orifice de raccordement de câble (1.9) de l'adaptateur de câble (1).

11. Dispositif de fixation de câble par vissage selon l'une quelconque des revendications 1 à 10,
**caractérisé en ce qu'**un tube ondulé (5) est relié de manière solidaire à l'orifice de raccordement de câble (1.9) au moyen d'un assemblage par collage.

12. Dispositif de fixation de câble par vissage selon l'une quelconque des revendications 1 à 11,
**caractérisé en ce que** le dispositif de fixation de câble par vissage est fabriqué à partir de plastique.

13. Boîtier électronique (6) pour un moteur électrique,
**caractérisé par** un dispositif de fixation de câble par vissage monté présentant les caractéristiques selon l'une quelconque des revendications 1 à 12.
